# EUROPEAN PATENT APPLICATION

(11) **EP 4 772 483 A1**
(43) Date of publication of application: **08.07.2026**
(21) Application number: 25225172.3
(22) Date of filing: 18.12.2025
(51) Int. Cl.: C03C 27/04, C04B 37/04, H01M 50/00

(54) **BARRIER COMPOSITIONS, ARTICLES COMPRISING BARRIER COMPOSITIONS, AND ASSOCIATED METHODS**

(30) Priority: 03.01.2025 US 202519008995
(71) Applicant: Aerospace Carbon Solutions LLC, Cincinnati, Ohio 45215-1915 (US)
(72) Inventor: REN, Muqing, Niskayuna, 12309-1027 (US); DEPUCCIO, Daniel Peter, Niskayuna, 12309-1027 (US); HART, Richard, Evendale, 45215 (US)
(74) Representative: Openshaw & Co.

(57) **Abstract**

Provided herein are barrier compositions, articles comprising barrier compositions, and methods for forming a barrier. By some approaches, a barrier composition comprises a ceramic material including a stabilized zirconia and a binder. The ceramic material includes a stabilized zirconia (ZrO₂) having a coefficient of thermal expansion (CTE) in the range of about 10 x 10⁻⁶/°C to about 12 x10⁻⁶/°C, the ceramic material present in the barrier composition in an amount in the range of about 10 percent by weight and about 75 percent by weight. The binder includes a phosphate-based compound, the binder present in the barrier composition in an amount in the range of about 40 percent by weight to about 75 percent by weight.

## Description

### TECHNICAL FIELD

These teachings relate generally to barrier compositions and more particularly to a barrier layer for an article.

### BACKGROUND

In a typical electrochemical device, a number of individual electrochemical cells are stacked or bundled together to form a stack. Electrochemical devices may convert chemical energy into electrical energy and/or convert electrical energy into chemical energy. In such traditional approaches for chemical production, electrochemical devices often operate at high temperatures and high pressures over long periods of time. However, long term operation of electrochemical devices is often compromised by the formation of leaks due to insufficient sealants. Accordingly, a barrier composition and an article including barrier compositions capable of withstanding such high temperatures and pressures may be desirable.

### BRIEF DESCRIPTION OF DRAWINGS

Various needs are at least partially met through provision of the barrier compositions, articles comprising barrier compositions, and associated methods described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:
FIG. 1 is a schematic view of an article having a barrier layer in accordance with various embodiments of these teachings;
FIG. 2 is a schematic view of a portion of an electrochemical device in accordance with various embodiments of these teachings;
FIG. 3 is a flowchart of an example method of making an electrochemical cell in accordance with various embodiments of these teachings;
FIG. 4 is a flowchart of an example method of making a barrier composition in accordance with various embodiments of these teachings;
FIG. 5 is an image of an interface of a metallic layer, barrier coating and a glass seal in accordance with various embodiments of these teachings;
FIG. 6 is an image of an interface of a metallic layer, barrier coating and a glass seal in accordance with various embodiments of these teachings;
FIGS. 7A, 7B, and 7C are images of an elemental composition of a metallic layer, barrier coating and a glass seal in accordance with various embodiments of these teachings;
FIGS. 8A and 8B are images of an interface of a metallic layer, barrier coating and a glass seal in accordance with various embodiments of these teachings;
FIG. 9 is an image of an interface of a metallic layer, barrier coating and a glass seal in accordance with various embodiments of these teachings;
FIG. 10 is an image of an elemental composition of a metallic layer, barrier coating and a glass seal in accordance with various embodiments of these teachings;
FIG. 11 is an image of an elemental composition metallic layer, barrier coating and a glass seal in accordance with various embodiments of these teachings;
FIG. 12A is a schematic view of a pressure testing device in accordance with various embodiments of these teachings;
FIG. 12B is graph showing a breakthrough pressure of two different barrier compositions in accordance with various embodiments of these teachings;
FIGS. 13A and 13B are images of an interface of a metallic layer, barrier coating and a glass seal in accordance with various embodiments of these teachings;
FIGS. 14A and 14B are images of an interface of a metallic layer, barrier coating and a glass seal in accordance with various embodiments of these teachings;
FIG. 15 is a table including experimental results, referred to in Example 3;
FIG. 16 is a table including experimental results, referred to in Example 3;
FIG. 17 is an image of an interface of a metallic layer, barrier coating and a glass seal, referred to in Example 3; and
FIG. 18 a graph of experimental results, referred to in Example 3.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required.

### DETAILED DESCRIPTION

The barrier compositions, articles comprising barrier compositions, and associated methods described herein provide approaches that may be suitable for high-temperature and high-pressure applications, for example, in an electrochemical device. The barrier composition described herein includes a ceramic material and a binder. The ceramic material may be a stabilized zirconia (ZrO₂) having a coefficient of thermal expansion (CTE) in the range of about 10 x 10⁻⁶/°C to about 12 x 10⁻⁶/°C, which may be present in the barrier composition in an amount in the range of about 10 percent by weight and about 75 percent by weight. The binder may be a phosphate-based compound present in the barrier composition in an amount in the range of about 40 percent by weight to about 75 percent by weight.

The barrier composition described herein may be used on a variety of metallic materials, with one exemplary group of metallic materials being a metallic interconnect in an electrochemical device. Traditionally, electrochemical devices operate continuously for long periods of time (e.g., thousands of hours) under high temperatures and pressures. During the long periods of operation, gas leaks may form from the interaction among the metallic interconnects, glass seals and the active layers of the electrochemical device. Specifically, chromium (Cr) from the metallic interconnect may migrate and combine with the glass seal and active layers, thereby initiating the formation of defects and eventual leak sites. Accordingly, the novel barrier composition described herein may be used to prevent or reduce chromium diffusion from the metallic interconnect into the glass seal and active layer. Together with a glass seal, the barrier compositions described herein provide a gas-tight seal, for example, at a metallic interconnect of an electrochemical device.

In addition, the barrier compositions described include a ceramic material with a coefficient of thermal expansion (CTE) which is substantially the same as the CTE of the metallic interconnect. As such, the adhesion of the barrier layer to the metallic layer and durability of the barrier layer during high-temperature, high-pressure operations are increased relative to traditional systems due to the improved CTE match between the ceramic and the metallic layer, which results in development of comparatively lower thermal stresses within the sealed components. Moreover, the barrier compositions described herein allow for higher pressure operation as compared to traditional barrier compositions.

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

As used herein, the term "metallic" refers to materials, articles, or components comprising metal elements, either in pure form or as alloys.

As used herein, the term "CTE" refers to a coefficient of thermal expansion of a material. For example, the CTE refers to a material property which quantifies the extent to which a material expands or contracts under varying thermal conditions.

As used herein, the term "CTE match" refers to a comparison of CTE values of two or more materials that have measurements or values within a permissible range of deviation without resulting in a change in the basic function, or intended performance to which it is related.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

The foregoing and other benefits may become clearer upon making a thorough review and study of the following detailed description.

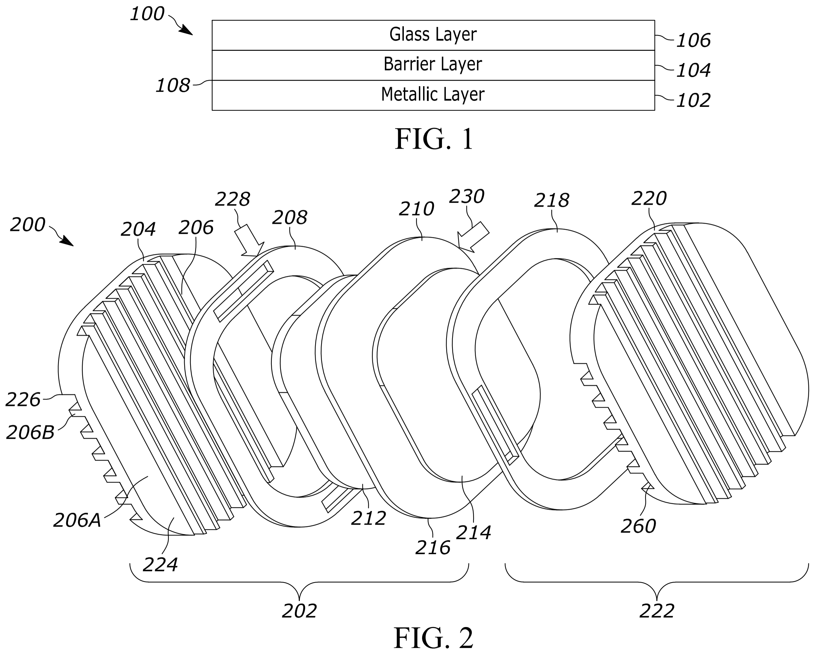

Referring now to the drawings, and in particular to FIG. 1, an illustrative component 100 that is compatible with many of these teachings is shown. The component 100 includes a metallic layer 102, a barrier layer 104 and a glass layer 106. The barrier layer 104 is formed on the metallic layer 102 between the metallic layer 102 and the glass layer 106. As will be described herein, the barrier layer 104 is configured to prevent a reaction between the metallic layer 102 and the glass layer 106, and specifically, prevent chromium migration between the metallic layer 102 and the glass layer 106.

The metallic layer 102 may be a metallic substrate, film, object, or the like. The composition of the metallic layer 102 may be selected based on the coefficient of thermal expansion (CTE). Generally, the metallic layer 102 may include a material with a CTE in the range of about 10 x 10⁻⁶/°C and about 12 x 10⁻⁶/°C, and in particular examples, about 12 x 10⁻⁶/°C. In some examples, the metallic layer 102 may be formed of a pure metal, a combination of metals, or an alloy. For example, the metallic layer 102 may include, but is not limited to, ferritic stainless steel, nickel-based alloys, steel, elemental chromium, or chromium-based alloys.

The barrier layer 104 includes a ceramic material and a binder. The ceramic material includes stabilized zirconia (ZrO₂) with a coefficient of thermal expansion (CTE) in the range of about 10 x 10⁻⁶/°C to about 12 x10⁻⁶/°C, and in particular examples, in the range of about 10 x 10⁻⁶/°C to about 11 x10⁻⁶/°C. In this manner, the adhesion of the barrier layer 104 to the metallic layer 102 and durability of the barrier layer 104 during high temperature operations are increased due to the CTE match between the ceramic material of the barrier layer 104 and the metallic layer 102.

In some examples, the stabilized zirconia (ZrO₂) includes at least one of magnesia stabilized zirconia, yttria stabilized zirconia, or ceria stabilized zirconia. In other examples, the stabilized zirconia (ZrO₂) includes yttria stabilized zirconia (YSZ). The stabilized zirconia may have a particle size range of about 30 nanometers to about 1000 nanometers and, in some aspects, in the range of about 30 nanometers to about 100 nanometers. The stabilized zirconia (ZrO₂) may include yttrium oxide (Y₂O₃) doped zirconia. The amount of yttrium oxide (Y₂O₃) in the yttrium oxide (Y₂O₃) doped zirconia may be in the range of about 0.1 molar percent to about 10 molar percent and, in some aspects, in the range of about 3.0 molar percent to about 10 molar percent, based on a total number of moles of the yttrium oxide and the zirconia in the stabilized zirconia.

In some examples, the binder is a phosphate-based compound. In some aspects, the phosphate-based compound includes aluminum. In one example, the aluminum-containing phosphate-based compound includes at least one of aluminum phosphate monobasic (Al(H₂PO₄)₃), aluminum metaphosphate (Al(PO₃)₃), aluminum phosphate (AlPO₄) with alumina, or aluminum phosphate (AlPO₄). In other examples, the phosphate-based compound includes zirconium phosphate (ZrP₂O₇) and/or yttrium phosphate (YPO₄).

The amount of ceramic material in the barrier formulation can be influenced by various factors. First, the amount of ceramic material influences the viscosity of the barrier formulation. For example, the viscosity of the barrier formulation may be too high (e.g., including too much ceramic material) or too low (e.g., including too little ceramic material) for the deposition of a coherent barrier layer. Additionally, cracks or defects may form in the barrier layer if a suitable amount of ceramic material is not present in the barrier formulation. Further, the barrier layer may be too thick if the amount of ceramic material is too high. In some applications, it may be desirable to form a thin barrier layer on the surface, sufficient to mitigate chromium migration. The amount of the ceramic material present in the barrier layer 104 may be in the range of about 30 percent by weight to about 100 percent by weight, based on a total weight of the barrier layer 104. In some examples, the amount of the ceramic material present in the barrier layer 104 may be in the range of about 10 percent by weight to about 75 percent by weight, based on a total weight of the barrier layer 104. In some examples, the amount of ceramic material in the barrier layer 104 may be in the range of about 30 percent by weight to about 60 percent by weight, based on a total weight of the barrier layer 104.

The amount of the phosphate-based compound in the barrier formulation can also be influenced by various factors. The amount of phosphate-based compound can be influenced by viscosity of the barrier formulation, which is a factor in making homogenous slurries. For example, it may be difficult to disperse the ceramic material in high viscosity slurries with too little phosphate-based compound. Additionally, the sealing properties of the formulation may be considered when determining the amount of phosphate-based compound. For example, if too much phosphate-based compound is used relative to the amount of ceramic material, the barrier formulation may not form a coherent seal and/or the CTE may not ideally match that of the metallic substrate. If an excessive amount of phosphate-based compound is used in the barrier formulation with only a small amount of the ceramic material, the ceramic material may disperse and only aggregate in isolated patches. Further, the mechanical properties (e.g., hardness) of the barrier layer may not be sufficient if the formulation includes too much phosphate-based compound. It may be desirable for the ceramic material to form a compact film in the barrier layer. The amount of phosphate-based compound in the barrier layer may be in the range of about 0 percent by weight to about 75 percent by weight, based on a total weight of the barrier layer. In some embodiments, the amount of phosphate-based compound in the barrier layer may be in the range of about 40 percent by weight to about 75 percent by weight, based on a total weight of the barrier layer. In some examples, the amount of phosphate-based compound in the barrier layer may be in the range of about 50 percent by weight to about 75 percent by weight, based on the total weight of the barrier layer.

In some examples, the barrier layer 104 may further include a dispersant to promote uniformity in dispersion of the ceramic material within the barrier layer. The dispersant may be any suitable dispersant and may be selected based on a composition of the ceramic material and aluminum-containing phosphate. For example, the dispersant may include at least one of ammonium polyacrylate or polyethylenimine (PEI). The amount of dispersant in the barrier layer 104 may be in the range of about 0.01 percent by weight to about 1.0 percent by weight, based on a total weight of the barrier composition. In some examples, the amount of dispersant in the barrier 104 is in the range of about 0.01 percent by weight to about 2.0 percent by weight, based on a total weight of the barrier composition. In other examples, the amount of dispersant in the barrier 104 is in the range of about 0.3 percent by weight to about 0.6 percent by weight, based on a total weight of the barrier composition.

The glass layer 106 may include any glass composition suitable for the given application. In some approaches, the glass layer 106 may include an aluminosilicate glass, a borosilicate glass, mixtures of these two glass types, or mixtures including one or both of these with other glass compositions. In some examples, the glass layer 106 may include silica (SiO₂), alumina (Al₂O₃), boron oxide (B₂O₃), calcium oxide (CaO), strontium oxide (SrO), magnesium oxide (MgO) or a combination including one or more of these.

Together, the glass layer 106 and the barrier layer 104 act as a gas tight seal at an interface 108 of the metallic layer 102 of the component 100.

Referring now to FIG. 2, an exploded portion of an electrochemical device 200 in accordance with various embodiments is described. The electrochemical device 200 may be configured as a solid oxide electrochemical device. It will be appreciated that the electrochemical device 200 may include any suitable type of electrochemical cell including solid oxide fuel cells (SOFC), solid oxide electrolyzers (SOE), or molten carbonate fuel cells (MCFC) As used herein, "electrochemical device" refers to any device that generates electrical energy from chemical reactions or uses electrical energy to drive chemical reactions. The electrochemical device 200 as described herein may operate in both electrolysis mode (e.g., chemical generation) or fuel cell mode (i.e., electricity generation).

The electrochemical device 200 includes an electrochemical cell 202. Generally, the electrochemical device 200 includes two or more electrochemical cells 202 stacked adjacent to, or on top of, each other. It will be appreciated that the electrochemical device 200 may include any suitable number of electrochemical cell 202 (e.g., 2, 4, 6, 8, 10, etc.).

The electrochemical cell 202 includes a metallic component 204, a barrier layer 206, a glass layer 208, and an active layer 210. The metallic component 204 supports the barrier layer 206, the glass layer 208, and the active layer 210. The barrier layer 206 is disposed between the metallic component 204 and the glass layer 208. The glass layer 208 is disposed between the metallic component 204 and the active layer 210. In particular, the barrier layer 206 is in direct contact with the metallic component 204 and, in some examples, a first barrier layer 206A may be formed on a first side 224 of the metallic component 204 and a second barrier layer 206B may be formed on a second side 226 of the metallic component 204 such that a barrier is formed between each adjacently stacked, or neighboring, electrochemical cell 202, 218. For example, a barrier layer 206 is disposed between the metallic component 204, the glass layer 208, and the first electrode 212 in the first electrochemical cell and a barrier layer 206 is disposed between the second electrode 214 and the metallic component 220 and the glass layer 212 of the second electrochemical cell 222.

The active layer 210 may include a first electrode 212, a second electrode 214, and an electrolyte 216 sandwiched between the first electrode 212 and the second electrode 214. The first electrode 212 may be an anode. The second electrode 214 may be a cathode. The first electrode 212, the second electrode 214 and the electrolyte 216 may comprise suitable materials based on the desired mechanical properties, electrochemical activity, chemical stability, and operating conditions of the electrochemical device.

In some aspects, during fuel cell operation of the electrochemical device 200, a first feed stream 228, for example a fuel, such as a hydrogen, carbon monoxide, or methane, is provided to the first electrode 212 and a second feed stream 230, for example, an oxidizing gas such as air, is provided to the second electrode 214. At the first electrode 212, the first feed stream 228 undergoes an oxidation reaction, which releases electrons that travel through an external circuit and then enter the second electrode 214. At the second electrode 214, the oxygen in the second feed stream 230 is reduced by the electrons released from the first electrode 212, with the electrolyte 216 allowing only the oxygen ions (O²⁻) to pass through to the first electrode 212. The oxygen ions (O²⁻) migrate through the electrolyte 216, where they participate in the oxidation reaction at the first electrode 212.

In some aspects, during electrolysis operation of the electrochemical device 200, a first feed stream 228, for example water (H₂O) and/or carbon dioxide (CO₂) are provided to the second electrode 214. When an electric current is applied, water (H₂O) and/or carbon dioxide (CO₂) are reduced to hydrogen (H₂) and/or carbon monoxide (CO) at the second electrode 214 (i.e., the cathode). Concurrently, oxygen ions (O²⁻) generated at the second electrode214 migrate through the electrolyte 216, where they combine to form oxygen gas (O₂) at the first electrode 212 (i.e., the anode).

Generally, during operation, the electrochemical device 200 is maintained at high operation temperatures, such as temperatures between about 400 °C to about 1000 °C, to facilitate the electrochemical reactions. As such, the metallic component 204 typically includes a metallic material, such as a chromium-containing alloy, with a CTE of about 12 x 10⁻⁶/ºC. However, at such high operating temperatures, chromium from the metallic component 204 may volatize, leach, and/or migrate from the metallic component 204 to the active layer 210. The chromium may leach out of the metallic component 204 and migrate to the glass layer 208 and/or the active layer 210. As such, chromium oxide (Cr₂O₃) may form at the interface between the glass layer 208 and the metallic component 204, which causes defects such as cracks or voids, may weaken the bond between the metallic component 204 and the glass layer 208, and may alter the hermeticity of the seal formed by the glass layer 208. Additionally, the chromium may migrate to the active layer 210 and form chromium oxide deposits such as chromium oxide (Cr₂O₃) or strontium chromate (SrCrO₄) deposits. The chromium oxide deposits can block the active sites on the active layer 210, which affects the electrochemical reaction and catalytic activity. The chromium migration may also initiate the formation of defects in the active layer 210.

Accordingly, the barrier layer 206 is disposed between the metallic component 204 and the glass layer 208 and/or the active layer 210 to prevent the chromium migration. In some embodiments, the barrier layer includes a ceramic material. In some embodiments, the barrier layer 206 includes a ceramic material and a binder. The ceramic material includes a stabilized zirconia having a coefficient of thermal expansion (CTE) in the range of about 10 x 10⁻⁶/°C to about 12 x10⁻⁶/°C. Advantageously, the barrier layer 206 is formed of a ceramic material with substantially the same CTE as the metallic component 204. In this manner, the durability of the barrier layer 206 during high-temperature, high-pressure operations is significantly enhanced due to the CTE match. Moreover, the CTE match improves the adhesion of the barrier layer 206 to the metallic component 204. Because the barrier layer 206 and the metallic component 204 have substantially similar thermal expansion properties, the mechanical deformation and stress at the interface such as interface 108 shown in FIG. 1 between the layers are minimized, and the delamination or cracking may be reduced.

In some examples, the stabilized zirconia (ZrO₂) may include at least one of magnesia stabilized zirconia, yttria stabilized zirconia, or ceria stabilized zirconia. In some examples, the stabilized zirconia is yttria stabilized zirconia (YSZ). In yet other examples, the stabilized zirconia may include yttrium oxide (Y₂O₃) doped zirconia. The amount of yttrium oxide (Y₂O₃) in the ceramic material may be in the range of about 0.1 molar percent to about 10 molar percent, based on a total number of moles of the yttrium oxide and the zirconia in the stabilized zirconia.

In some examples, the phosphate-based compound may include at least one of aluminum phosphate monobasic (Al(H₂PO₄)₃), aluminum metaphosphate (Al(PO₃)₃), aluminum phosphate (AlPO₄) with alumina, or aluminum phosphate (AlPO₄).

In some examples, the thickness of the barrier layer 206 is in the range of about 2 micrometers to about 25 micrometers.

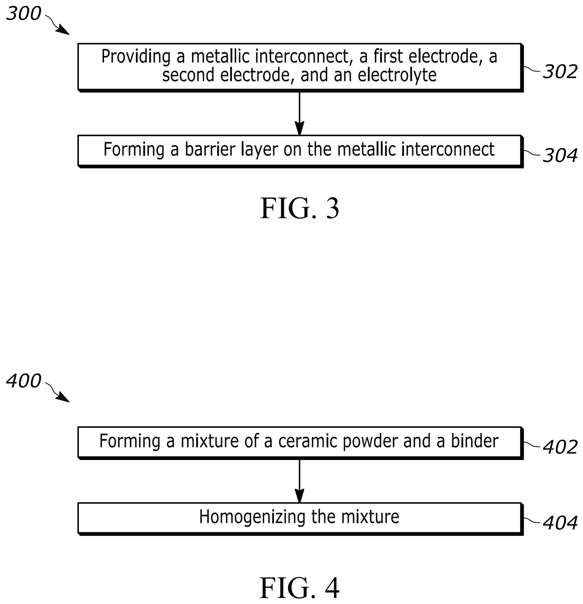

Referring to FIG. 3, an exemplary method 300 for making an electrochemical cell is provided. As will be appreciated, the metallic interconnect may be an example of the metallic component 204 as described in reference to FIG. 2, the barrier layer may be an example of the barrier layer 206 as described in reference to FIG. 2, the glass layer may be an example of the glass layer 208 as described in reference to FIG. 2, the first electrode, the second electrode and the electrolyte may be an example of the first electrode 212, second electrode 214, electrolyte 216 as described in reference to FIG. 2.

At block 302, the exemplary method 300 includes providing a metallic interconnect, a first electrode, a second electrode, and an electrolyte disposed therebetween.

In some examples, the first electrode, the second electrode and the electrolyte may be prepared from slurries comprising the respective materials. The respective slurries may be applied to a substrate using techniques such as painting, screen printing, or spraying. After application, the layers are dried and then subjected to high temperature heat treatment where the layers sinter, or fuse together, to form a dense, cohesive structure (i.e., the active layer 210 as described in reference to FIG. 2).

In other examples, the first electrode, the second electrode, and the electrolyte are thermally sprayed on the substrate. If thermally sprayed, the active layers (e.g., the first electrode 212 and the second electrode 214) do not need high temperature heat treatment.

At block 304, a barrier layer is formed on the metallic interconnect. To form the barrier layer on the metallic interconnect, a barrier composition is painted, screen printed, or thermal sprayed on the surface of the metallic interconnect. The barrier composition comprises a ceramic material having a coefficient of thermal expansion (CTE) in the range of about 10 x 10⁻⁶/°C and about 12 x10⁻⁶/°C and a binder including a phosphate-based compound.

In some examples, the barrier composition is painted, screen printed, thermal sprayed on the metallic interconnect and heated to a temperature in the range of about 40 degrees Celsius to about 350 degrees Celsius. For example, the metallic interconnect may be placed in a furnace or on a hot plate to dry the barrier composition and form the barrier layer.

In some approaches, the method 300 may be repeated for a plurality of electrochemical cells (e.g., electrochemical cell 202, 218 as shown in FIG. 2). The electrochemical device (e.g., electrochemical device 200 as shown in FIG. 2) may be assembled by stacking the plurality of electrochemical cells after the barrier composition is painted, screen printed, or thermal sprayed on each metallic interconnect.

In some examples, the barrier composition is applied to the metallic interconnect to form a barrier layer with a thickness in the range of about 2 micrometers to about 25 micrometers.

In some embodiments, the method 300 further includes disposing a glass seal between the metallic interconnect and at least one of the first electrode or the second electrode.

Referring to FIG. 4, an exemplary method 400 for making a barrier composition is provided. At block 402, the method 400 includes forming a mixture of a ceramic powder and a binder. The ceramic powder includes a ceramic material having a coefficient of thermal expansion (CTE) in the range of about 10 x 10⁻⁶/°C and about 12 x10⁻⁶/°C. The binder includes a phosphate-based compound.

In some approaches, the barrier composition is formed with a ceramic powder in the range of about 30 percent by weight to about 60 percent by weight and the binder in the range of about 50 percent by weight to about 75 percent by weight. In other approaches, the barrier composition is formed with a ceramic powder in the range of about 30 percent by weight to about 60 percent by weight, the binder in the range of about 50 percent by weight to about 75 percent by weight and a dispersant in the range of about 0.01 percent by weight to about 1.0 percent by weight. The dispersant may include at least one of water, methanol, or ethanol.

In some examples, the ceramic material may be at least one of magnesia stabilized zirconia, yttria stabilized zirconia, ceria stabilized zirconia, or yttria stabilized zirconia (YSZ). In other examples, the ceramic powder may be yttria stabilized zirconia having a particle size in the range of about 30 nanometers (nm) and about 1000 nanometers (nm). In yet another example, the stabilized zirconia comprises at least one of magnesia stabilized zirconia, yttria stabilized zirconia, or ceria stabilized zirconia.

In some examples, the stabilized zirconia includes yttrium oxide (Y₂O₃) doped zirconia, that is, YSZ. The ceramic powder may be formed with about 0.1 molar percent to about 10 molar percent yttrium oxide (Y₂O₃), based on a total number of moles of the yttrium oxide and the zirconia in the stabilized zirconia.

In some examples, the binder is an aqueous solution of the phosphate-based compound in water.

In some examples, the phosphate-based compound includes at least one of aluminum phosphate monobasic (Al(H₂PO₄)₃), aluminum metaphosphate (Al(PO₃)₃), aluminum phosphate (AlPO₄) with alumina, aluminum phosphate (AlPO₄), zirconium phosphate (ZrP₂O₇) or yttrium phosphate (YPO₄).

In some approaches, the ceramic material and the binder are mixed with ball media. The ceramic material and the binder are placed in a container and metal or ceramic balls are added to the container. The container is sealed and then rotated or agitated, and the rotation causes the balls to tumble and mix the ceramic powder and binder. In some approaches, the sealed container is rotated by a jar roller mill.

In some embodiments, the ceramic powder includes a first portion and a second portion. After forming an intermediate mixture with the first portion of the ceramic material and the binder, at block 402, a dispersant solution including a dispersant and a solvent are formed. The dispersant solution and the second portion of the ceramic powder are mixed with the intermediate portion to form a final mixture.

In some approaches, the intermediate portion including the first portion of the ceramic material and the binder are mixed using ball media. After the initial mixing, a dispersant solution and the second portion of the ceramic powder are added to the intermediate portion. The dispersant may include at least one of ammonium polyacrylate or polyethylenimine (PEI).

At block 404, the method 400 includes homogenizing the mixture. The mixture of the ceramic powder and the binder are milled until the mixture is homogenous. For example, the mixture may be homogenized with at least one of a jar roller mill, a high shear mixer, a high shear disperser, a homogenizer, an ultrasonic disperser, a vibratory mill, or an agitator bead mill.

It should be appreciated that while the above referenced embodiments have been described in the context of an electrochemical cell, the sealing compositions described herein may be applied to, but not limited to, ceramic-based energy devices, heat exchangers, and the like. The sealing compositions may be used to prevent or reduce chromium migration between various components used in high-temperature, high-pressure applications.

To further illustrate the present disclosure, examples are given herein. It is to be understood that these examples are provided for illustrative purposes and are not to be construed as limiting the scope of the present disclosure.

### Examples

### Example 1

A first barrier composition was prepared for a stainless steel metallic component. The formulation for the first barrier composition is shown in Table 1.

**TABLE 1**

| **Ingredient** | **Quantity (wt%)** |
|---|---|
| Yttrium Stabilized Zirconia (YSZ) Ceramic Powder | 44.5 |
| Aluminum Phosphate Monobasic (Al(H₂PO₄)₃) Binder | 54.1 |
| Polyethyleneimine (PEI) Dispersant in water | 1.4 |

To prepare the first barrier composition, approximately 90 wt% of the YSZ ceramic powder was combined with the binder to form an intermediate mixture. The YSZ ceramic powder was Tosoh TZ-8Y. The YSZ ceramic powder was mixed with the binder using YTZ^{®} 5 millimeter (mm) grinding media in a sealed container on a jar roller mill.

A PEI dispersant solution was prepared by mixing the PEI dispersant with water. The PEI solution comprised 33 wt% PEI in water. PEI dispersant was added to the intermediate mixture at a dosage of 0.8 mg PEI per cubic meter (m²) surface area of the YSZ powder. The PEI dispersant solution was added to the intermediate mixture along with the remaining 10 wt% of the YSZ ceramic powder to form a final mixture. The final mixture was milled via the jar roller mill to form a homogenous mixture.

The barrier slurry was painted on a metal surface and dried at about 60-80 °Celsius to form a barrier layer.

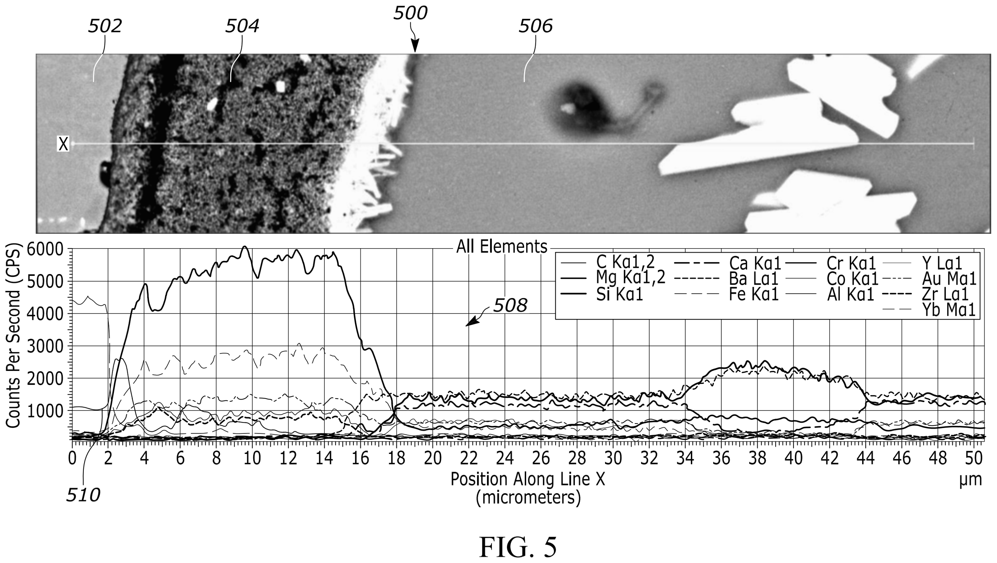

FIG. 5 includes an image of the first metal interconnect, barrier layer, and glass seal that was fabricated using the first barrier composition. The first image 500 is a cross-sectional view acquired using a scanning electron microscope (SEM). The first image 500 includes a metallic layer 502, a barrier layer 504, and a glass layer 506. The line X on the image 500 represents the position of a line scan taken of the metal interconnect 502, barrier layer 504, and glass seal 506 with the SEM.

The graph 508 provides an energy dispersive X-ray spectroscopy elemental analysis of the first metallic layer 502, barrier layer 504, and glass seal 506. The graph 508 shows an intensity of various elements along the line X. The graph 508 shows intensity in counts per second (cps) as a function of position along the line X in micrometers. The intensity of chromium 510 is relatively high in the metallic layer 502, as the metallic layer 502 is a stainless-steel material including chromium. However, the intensity of chromium 510 is relatively low within the glass layer 506, indicating that the barrier layer 504 helps to mitigate the migration of chromium from the metallic layer 502. The lines representing zirconium (Zr) and yttrium (Y) lines in the graph 508 confirm the presence of YSZ in the barrier layer 501.

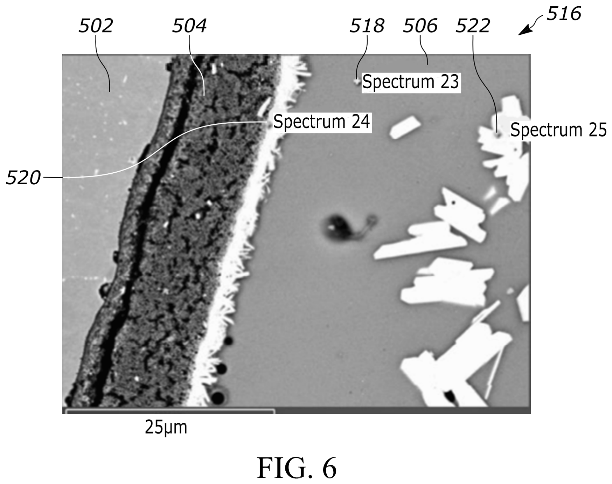

FIG. 6 includes second image 516 of the first metallic layer 502, barrier layer 504, and glass seal 506. The second image 516 is another cross-sectional SEM image of a portion of the metallic layer 502, the barrier layer 504, and the glass layer 506. The second image 516 shows the positions of point scans taken at three different points 518, 520, 522 using an SEM. The first point 518 is within the glass layer 506. The second point 520 is along an interface of the barrier layer 504 and the glass layer 506. The third point 522 was taken on the glass layer 506 and is further from the barrier layer 504 than the first point 518.

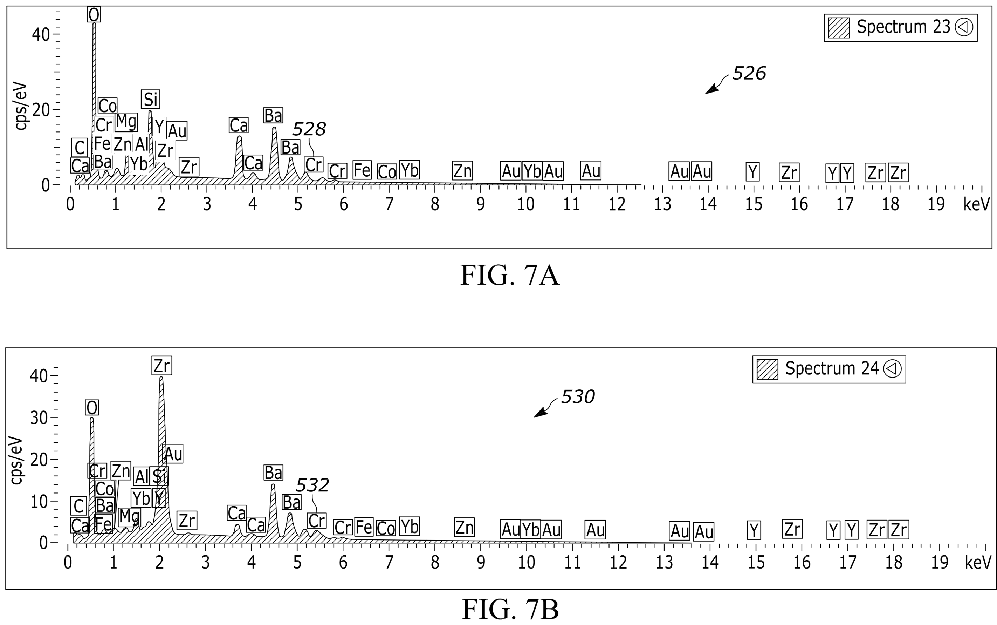

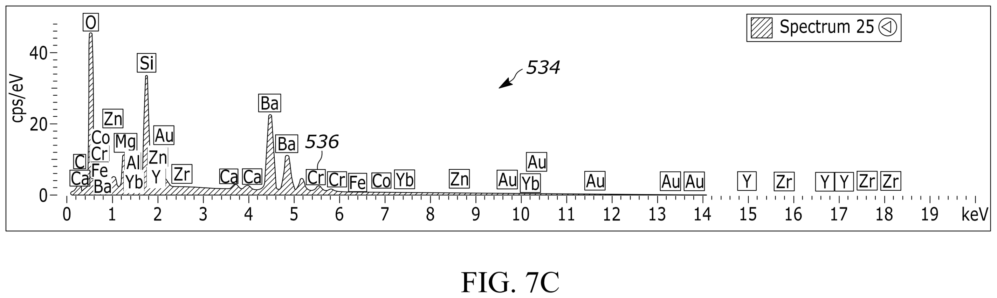

FIGS. 7A, 7B, and 7C are images that were taken of the metallic layer 502, barrier layer 504, and glass seal 506 using energy dispersive X-ray spectroscopy (EDS). FIG. 7A is a first energy dispersive X-ray spectroscopy elemental analysis 526 of the first metallic layer 502, barrier layer 504, and glass seal 506 at the first point 518, showing a first intensity 528 of chromium. FIG. 7B is a second energy dispersive X-ray spectroscopy elemental analysis of the first metallic layer 502, barrier layer 504, and glass seal 506 at the second point 520, showing a second intensity 532 of chromium. FIG. 7C is a third energy dispersive X-ray spectroscopy elemental analysis 534 of the first metallic layer 502, barrier layer 504, and glass seal 506 at the second point 522, showing a third intensity 536 of chromium. The elemental analysis was acquired by taking a point scan of each point 518, 520, 522 using an SEM. The elemental analyses show the intensity of various elements at each point as reflected in counts per second (cps) as function of electron volts (eV). The intensity of chromium is low at the first point 518, the second point 520, and the third point 522 of the metallic layer 502, barrier layer 504, and glass seal 506, showing that that barrier layer 504 acts as an effective barrier for chromium.

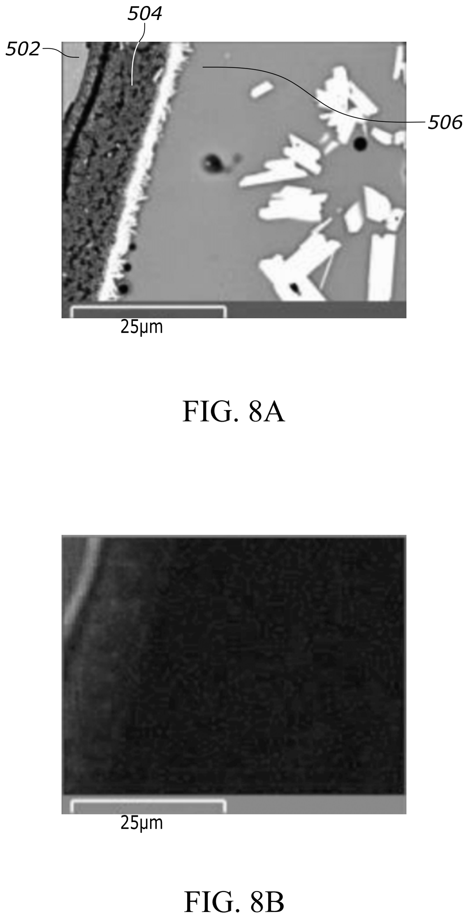

FIGS. 8A and 8B are further images of the metallic layer 502, barrier layer 504, and glass seal 506. FIG. 8A is a SEM image showing the metallic layer 502, the barrier layer 504, and the glass layer 506. FIG. 8B is a map of the intensity of chromium in the metallic layer 502, the barrier layer 504, and glass seal 506, mapped on the image of FIG. 8A. In FIG. 8B, dark areas represent low chromium while light areas represent areas of high chromium intensity. The intensity of chromium is highest in the metallic layer 502. Very little chromium has migrated from the metallic layer 502 into the glass layer 506.

### Example 2

A second barrier composition was prepared for a stainless-steel metallic component. The formulation for the second barrier composition is shown in Table 2.

**TABLE 2**

| **Ingredient** | **Quantity (wt%)** |
|---|---|
| Yttrium Stabilized Zirconia (YSZ) Ceramic Powder | 49 |
| Aluminum Phosphate (AlPO₄) (Aremco Ceramabind^{™} 542) Binder in water | 51 |

To prepare the second barrier composition, YSZ ceramic powder was mixed with the aluminum phosphate binder (AlPO₄). The aluminum phosphate binder was in a liquid state. The YSZ ceramic powder was Tosoh TZ-8Y. The YSZ ceramic powder and the aluminum phosphate binder (Aremco Ceramabind^{™} 542) were mixed using a using a YTZ^{®} 5 millimeter (mm) grinding media in a sealed container on a jar roller mill. The mixture was milled until it was homogenous. The barrier slurry was painted on a metal surface and dried at about 60-80 °C during assembly to form a barrier layer between a metallic layer and a glass seal.

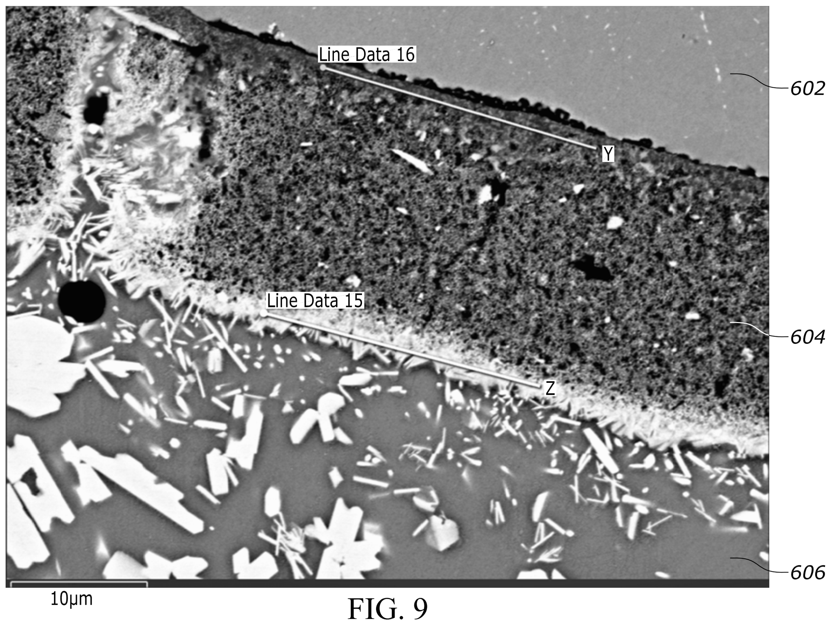

FIG. 9 is a cross-sectional view of a portion of the metallic layer, barrier layer and glass seal that was fabricated using the second barrier composition. The image in FIG. 9 was acquired using a scanning electron microscope (SEM). The image shows a metallic layer 602, the barrier layer 604, and a glass layer 606. The line Y shows the position of a first line scan taken near an interface of the metallic layer 602 and the barrier layer 604. The line Z shows the position of a second line scan taken-near an interface of the barrier layer 604 and the glass layer 606.

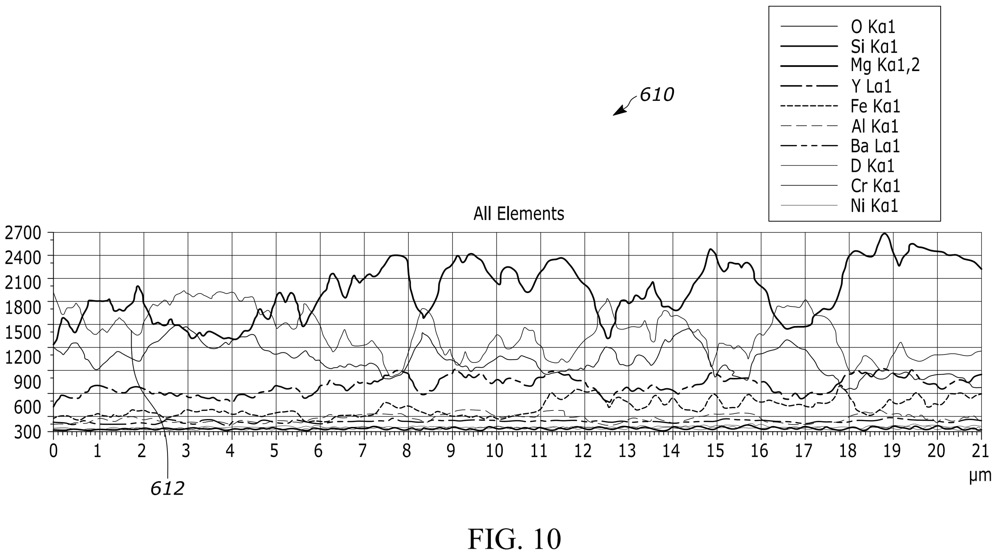

FIG. 10 includes a graph 610 that shows an energy dispersive X-ray spectroscopy elemental analysis of the metallic layer 602, the barrier layer 604, and a glass layer 606 of FIG. 9. The graph 610 shows an intensity of various elements along the line Y. The graph 610 shows intensity in counts per second (cps) as a function of position along the line Y in micrometers. The intensity of chromium 612 is relatively high along line Y due to proximity to the metallic layer 602.

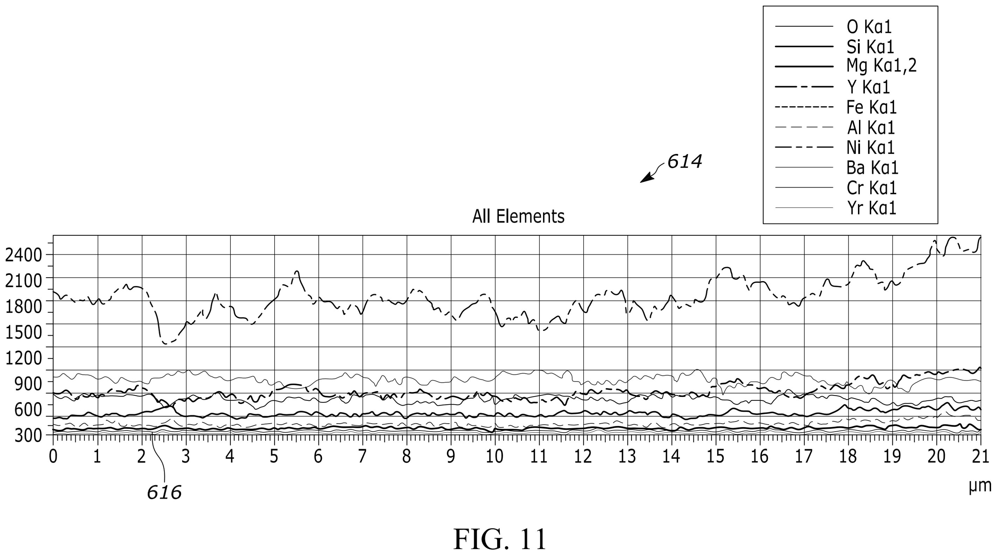

FIG. 11 includes a graph 614 that shows an energy dispersive X-ray spectroscopy elemental analysis of the metallic layer 602, the barrier layer 604, and the glass layer 606 of FIG. 9. The graph 614 shows an intensity of various elements along the line Z. The graph 610 shows intensity in counts per second (cps) as a function of position along the line Z in micrometers. The intensity of chromium 616 is relatively low along line Z, showing that the barrier layer 604 acts as a barrier to chromium migration.

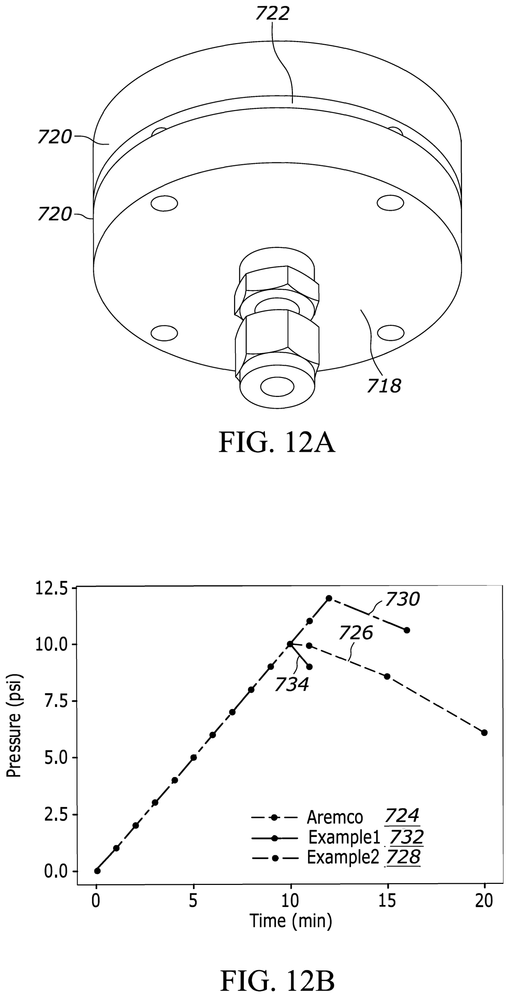

FIG. 12A is an image of a pressure testing device 718 that was used to test the second barrier composition. In the pressure testing device 718, to perform a breakthrough pressure test, a barrier layer 722 comprising a target barrier composition to be tested (e.g., the second barrier composition) is disposed between two stainless steel discs 720.

FIG. 12B is a graph showing the breakthrough pressure of three different barrier layers that were tested using the device 718. The pressure on the barrier layer is depicted in pounds per square inch (psi) as a function of time in minutes (min). The breakthrough pressure indicates the pressure at which the barrier layer fails, breaking a gas seal between the two stainless steel discs 720. Line 724 shows the pressure applied to a first barrier layer. The first barrier layer comprised an Aremco sealant, which was a water-based alumina sealant. The point 726 shows the breakthrough pressure of the first barrier. Line 728 shows the pressure applied to a second barrier layer, the second barrier layer comprised the second barrier (formulation of Table 2). The point 730 shows the breakthrough pressure of the second barrier. Line 732 shows the pressure applied to a third barrier layer, the third barrier layer comprised the third barrier (formulation of Table 1). The breakthrough pressure of the second barrier was higher than the breakthrough pressure of the first barrier, indicating the second barrier was able to withstand higher pressures than the first barrier. In addition, the breakthrough pressure of the first barrier was similar to the breakthrough pressure of the third barrier.

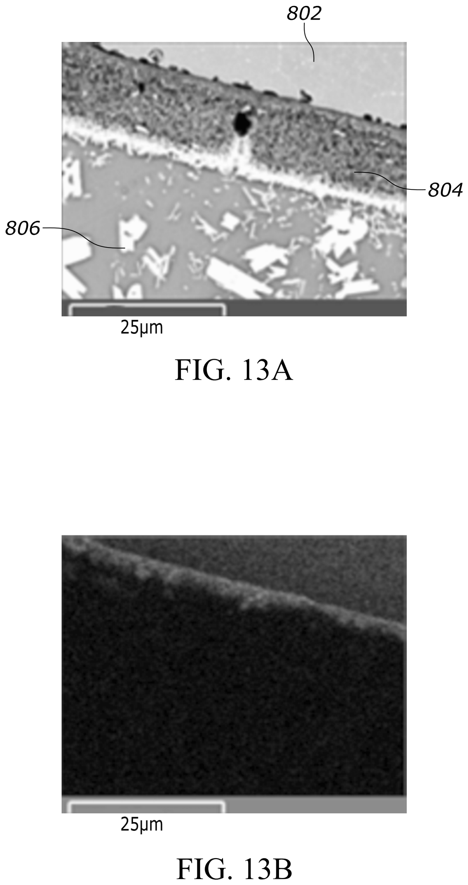

FIGS. 13A and 13B are further SEM images of the second metallic layer 602, the barrier layer 604, and the glass layer 606. FIG. 13A is an SEM image showing the metallic layer 802, the barrier layer 804, and the glass layer 806. FIG. 13B is a map of the intensity of chromium in the metallic layer 602, the barrier layer 604, and the glass layer 606, mapped on the image of FIG. 13A. In FIG. 13B, dark areas represent low chromium while light areas represent areas of high chromium intensity. The intensity of chromium is highest in the metallic layer 802 and little to no chromium is present in the barrier layer 804 and the glass layer 806, showing that the barrier layer 804 that was created by the second barrier layer is an effective chromium barrier.

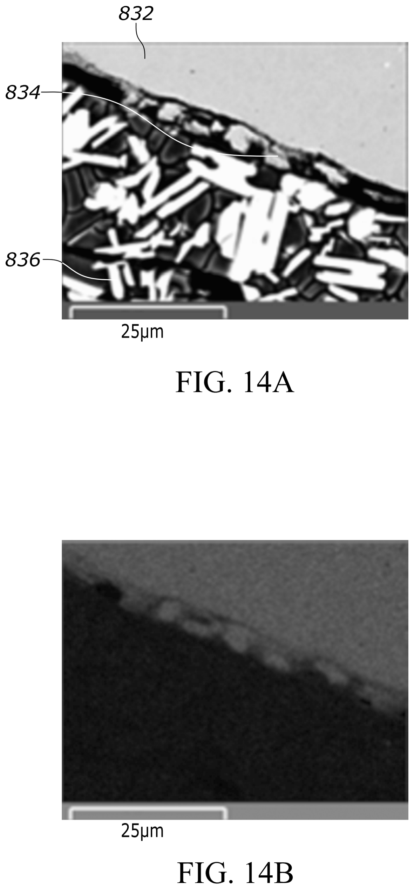

FIGS. 14A and 14B are SEM images of an alumina-based sealant as a barrier layer 834 between a metallic layer 832 and a glass layer 836. The alumina-based sealant was an Aremco sealant, for example Aremco Ceramabind^{™} 542, having a solids content of 40 percent by weight. FIG. 14B is a map of the intensity of chromium in the metallic layer 832 and the glass layer 836 with an alumina barrier layer 834, mapped on the image of FIG. 14A. In FIG. 14B, dark areas represent low chromium while light areas represent areas of high chromium intensity. A comparison of FIG. 13B with FIG. 14B shows that the second barrier layer is at least as effective as a chromium barrier as the alumina-based sealant.

### Example 3

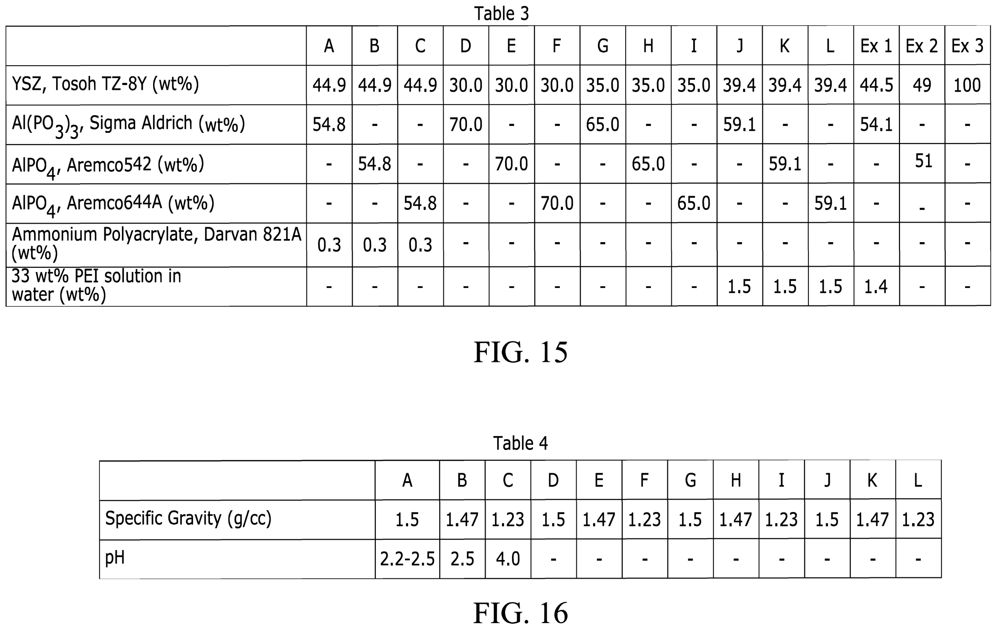

FIG. 15 is a table (Table 3) with various barrier formulations in accordance with the teachings herein. The barrier formulations as prepared are shown in Table 3. FIG. 16 is a table (Table 4) illustrating the specific gravity and pH of the phosphate bade binders of FIG. 15. When used as a barrier layer, the various barrier formulations in FIG. 15 showed to be an effective chromium barrier.

### Example 4

A third barrier composition was prepared for a stainless-steel metallic component. The formulation for the third barrier composition is shown in Table 4.

| **Ingredient** | **Quantity (wt%)** |
|---|---|
| Yttrium Stabilized Zirconia (YSZ) Ceramic Powder | 100 |

To prepare the third barrier composition, YSZ ceramic powder was thermal sprayed on a metal surface to form a barrier layer between a metallic layer and a glass seal.

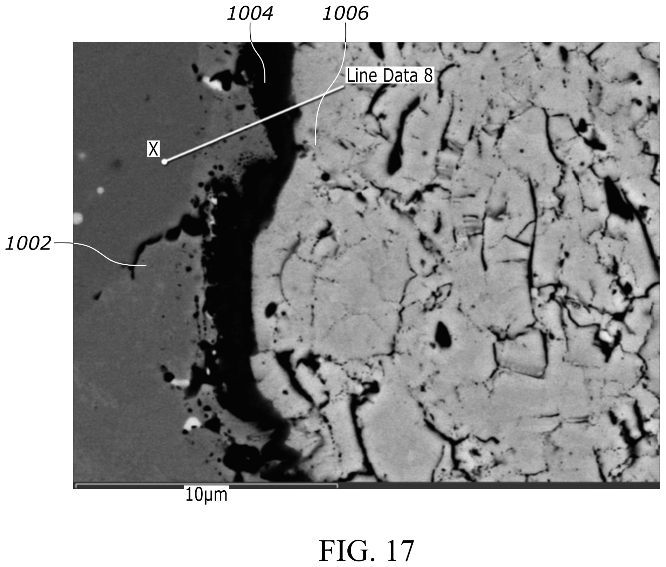

FIG. 17 is a cross-sectional view of a portion of the metallic layer, barrier layer and glass seal that was fabricated using the third barrier composition. The image in FIG. 17 was acquired using a scanning electron microscope (SEM). The image shows a metallic layer 1002, the barrier layer 1004, and the glass seal 1006. The line X shows the position of a first line scan taken near an interface of the metallic layer 1002, the barrier layer 1004, and the glass seal 1006.

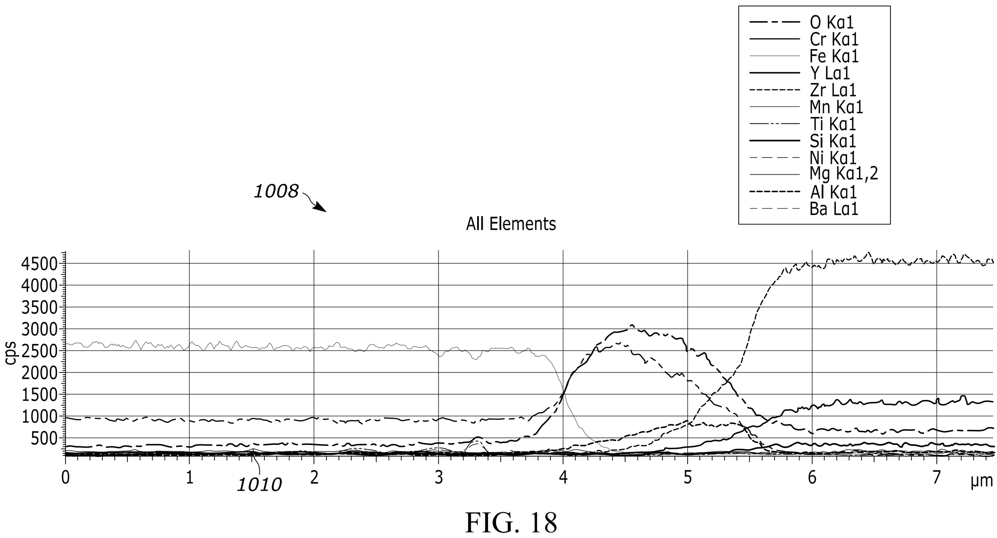

FIG. 18 includes a graph 1008 of an energy dispersive X-ray spectroscopy elemental analysis of the metallic layer 1002, the barrier layer 1004, and the glass seal 1006. The graph 1008 shows an intensity of various elements along the line X. The graph 1008 shows intensity in counts per second (cps) as a function of position along the line X in micrometers. The intensity of chromium 1010 is relatively low along line X, showing that the barrier layer 1004 can suppress chromium migration between the metallic layer 1002 and the glass seal 1006.

All percentages and ratios are calculated by weight unless otherwise indicated. All percentages and ratios are calculated based on the total weight of the compound or composition unless otherwise indicated.

While several examples have been described in detail, it is to be understood that the disclosed examples may be modified. Therefore, the foregoing description is to be considered non-limiting.

Further aspects of the disclosure are provided by the subject matter of the following clauses:
A barrier composition for a glass-metallic interface layer for forming a barrier layer between a glass seal and an adjacent metallic component, the barrier composition comprising: a ceramic material comprising a stabilized zirconia (ZrO₂) having a coefficient of thermal expansion (CTE) in the range of about 10 x 10⁻⁶/ºC to about 12 x10⁻⁶/ºC, the ceramic material present in the barrier composition in an amount in the range of about 10 percent by weight and about 75 percent by weight, based on a total weight of the barrier composition; and a binder comprising phosphate-based compound present in the barrier composition in an amount in the range of about 40 percent by weight to about 75 percent by weight, based on a total weight of the barrier composition.

The barrier composition of any preceding clause, wherein the coefficient of thermal expansion of the ceramic material is within the range of about 10 x 10⁻⁶/ºC to about 11 x10⁻⁶/ºC.

The barrier composition of any preceding clause, wherein the phosphate-based compound comprises at least one of aluminum phosphate monobasic (Al(H₂PO₄)₃), aluminum metaphosphate (Al(PO₃)₃), aluminum phosphate (AlPO₄) with alumina, or aluminum phosphate (AlPO₄).

The barrier composition of any preceding clause, wherein the binder is an aqueous solution of the phosphate-based compound in water.

The barrier composition of any preceding clause, wherein the stabilized zirconia comprises at least one of magnesia stabilized zirconia, yttria stabilized zirconia, or ceria stabilized zirconia.

The barrier composition of any preceding clause, wherein the ceramic material comprises yttria stabilized zirconia (YSZ).

The barrier composition of any preceding clause, wherein the ceramic material comprises yttria stabilized zirconia having a particle size in the range of about 30 nanometers (nm) and about 1000 nanometers (nm).

The barrier composition of any preceding clause, wherein the stabilized zirconia comprises yttrium oxide (Y₂O₃) doped zirconia, and wherein the yttrium oxide (Y₂O₃) is present in the ceramic material in an amount in the range of about 0.1 molar percent to about 10 molar percent, based on a total number of moles of the yttrium oxide and the zirconia in the stabilized zirconia.

The barrier composition of any preceding clause, wherein the ceramic material is present in the barrier composition in an amount within the range of about 30 percent by weight to about 60 percent by weight, based on the total weight of the barrier composition.

The barrier composition of any preceding clause, wherein the binder is present in the barrier composition in an amount within the range of about 50 percent by weight to about 75 percent by weight, based on the total weight of the barrier composition.

The barrier composition of any preceding clause, further comprising a dispersant.

The barrier composition of any preceding clause, wherein the dispersant comprises at least one of ammonium polyacrylate or polyethylenimine (PEI).

The barrier composition of any preceding clause, wherein the dispersant is present in the barrier composition in an amount in the range of about 0.01 percent by weight to about 1.0 percent by weight, based on the total weight of the barrier composition.

The barrier composition of any preceding clause, further comprising a solvent.

The barrier composition of any preceding clause, wherein the solvent comprises at least one of water, methanol, or ethanol.

An electrochemical cell comprising: a metallic component; and a barrier layer disposed on a surface of the metallic component, the barrier layer comprising: a ceramic material comprising a stabilized zirconia having a coefficient of thermal expansion (CTE) in the range of about 10 x 10⁻⁶/ºC and about 11 x10⁻⁶/ºC; and a binder comprising a phosphate-based compound.

The electrochemical cell of any preceding clause, wherein the ceramic material comprises yttria stabilized zirconia (YSZ), and wherein the phosphate-based compound comprises at least one of aluminum phosphate monobasic (Al(H₂PO₄)₃), aluminum metaphosphate (Al(PO₃)₃), aluminum phosphate (AlPO₄), or aluminum phosphate (AlPO₄).

The electrochemical cell of any preceding clause, wherein the metallic component is in direct contact with the barrier layer.

The electrochemical cell of any preceding clause, further comprising a glass component, wherein the barrier layer is disposed between the metallic component and the glass component.

The electrochemical cell of any preceding clause, wherein the glass component is disposed between the metallic component and an active layer of the electrochemical cell.

The electrochemical cell of any preceding clause, wherein the metallic component is an interconnect.

The electrochemical cell of any preceding clause, wherein the metallic component comprises chromium (Cr).

The electrochemical cell of any preceding clause, wherein the metallic component is ferritic stainless steel.

The electrochemical cell of any preceding clause, wherein the barrier layer is a barrier to at least one of a gas barrier or a barrier to chromium migration.

The electrochemical cell of any preceding clause, wherein the electrochemical cell is a solid oxide cell.

The electrochemical cell of any preceding clause, wherein a thickness of the barrier layer is in the range of about 2 micrometers to about 25 micrometers.

An electrochemical device comprising the electrochemical cell of clause 16.

A method of making an electrochemical cell, the electrochemical cell comprising an anode, a cathode and an electrolyte disposed therebetween and a metallic interconnect disposed adjacent to at least one of the anode or the cathode, the method comprising forming a barrier layer comprising a ceramic powder on the metallic interconnect, the ceramic powder comprising a ceramic material having a coefficient of thermal expansion (CTE) in the range of about 10 x 10⁻⁶/ºC and about 12 x10⁶/ºC and a binder comprising a phosphate-based compound.

The method of any preceding clause, wherein the ceramic powder comprises yttria stabilized zirconia (YSZ), and wherein the phosphate-based compound comprises at least one of aluminum phosphate monobasic (Al(H₂PO₄)₃), aluminum metaphosphate (Al(PO₃)₃), aluminum phosphate (AlPO₄) with alumina, or aluminum phosphate (AlPO₄).

The method of any preceding clause, wherein forming the barrier layer comprises at least one of painting or spraying the ceramic material and the binder onto a surface of the metallic interconnect.

The method of any preceding clause, further comprising disposing a glass seal between the metallic interconnect and the at least one of the anode or the cathode.

A method of making a barrier composition comprising: forming a mixture of a ceramic powder comprising a ceramic material having a coefficient of thermal expansion (CTE) in the range of about 10 x 10⁻⁶/ºC and about 11 x10⁻⁶/°C and a binder comprising a phosphate-based compound; and homogenizing the mixture.

The method of any preceding clause, wherein forming the mixture of the ceramic powder and the binder comprises mixing the ceramic powder and the binder using a ball media.

The method of any preceding clause, wherein forming the mixture of the ceramic powder and the binder comprises mixing the ceramic powder and the binder in a sealed container on a jar roller mill.

The method of any preceding clause, wherein homogenizing the mixture is performed via at least one of a jar roller mill, a high shear mixer, a high shear disperser, a homogenizer, an ultrasonic disperser, a vibratory mill, or an agitator bead mill.

The method of any preceding clause, wherein the ceramic powder comprises a first portion and a second portion and wherein forming a mixture comprises: forming an intermediate mixture comprising the first portion of the ceramic material and the binder; forming a dispersant solution comprising a dispersant and a solvent; and forming a final mixture comprising the intermediate mixture, the dispersant solution, and the second portion of the ceramic powder.

The method of any preceding clause, wherein the dispersant comprises at least one of ammonium polyacrylate or polyethylenimine (PEI).

An electrochemical cell comprising: a metallic component; and a barrier layer disposed on a surface of the metallic component, the barrier layer comprising: a ceramic material comprising a stabilized zirconia having a coefficient of thermal expansion (CTE) in the range of about 10 x 10⁻⁶/°C and about 11 x10⁻⁶/°C.

A barrier composition for a glass-metallic interface layer for forming a barrier layer between a glass seal and an adjacent metallic component, the barrier composition comprising: a ceramic material comprising a stabilized zirconia (ZrO₂) having a coefficient of thermal expansion (CTE) in the range of about 10 x 10⁻⁶/°C to about 12 x10⁻⁶/°C, the ceramic material present in the barrier composition in an amount in the range of about 10 percent by weight and about 75 percent by weight, based on a total weight of the barrier composition; and a binder comprising a phosphate-based compound present in the barrier composition in an amount in the range of about 0 percent by weight to about 75 percent by weight, based on a total weight of the barrier composition.

## Claims

1. A barrier composition for a glass-metallic interface layer for forming a barrier layer (104) between a glass seal (106) and an adjacent metallic component (102), the barrier composition comprising:
a ceramic material comprising a stabilized zirconia (ZrO₂) having a coefficient of thermal expansion (CTE) in the range of about 10 x 10⁻⁶/°C to about 12 x10⁻⁶/°C, the ceramic material present in the barrier composition in an amount in the range of about 10 percent by weight and about 75 percent by weight, based on a total weight of the barrier composition; and
a binder comprising phosphate-based compound present in the barrier composition in an amount in the range of about 40 percent by weight to about 75 percent by weight, based on a total weight of the barrier composition.

2. The barrier composition of claim 1, wherein the phosphate-based compound comprises at least one of aluminum phosphate monobasic (Al(H₂PO₄)₃), aluminum metaphosphate (Al(PO₃)₃), aluminum phosphate (AlPO₄) with alumina, or aluminum phosphate (AlPO₄).

3. The barrier composition of claim 1 or 2, wherein the stabilized zirconia comprises at least one of magnesia stabilized zirconia, yttria stabilized zirconia, or ceria stabilized zirconia.

4. The barrier composition of any preceding claim, wherein the stabilized zirconia comprises yttrium oxide (Y₂O₃) doped zirconia, and wherein the yttrium oxide (Y₂O₃) is present in the ceramic material in an amount in the range of about 0.1 molar percent to about 10 molar percent, based on a total number of moles of the yttrium oxide and the zirconia in the stabilized zirconia.

5. The barrier composition of any preceding claim, wherein the ceramic material is present in the barrier composition in an amount within the range of about 30 percent by weight to about 60 percent by weight, based on the total weight of the barrier composition.

6. The barrier composition of any preceding claim, wherein the binder is present in the barrier composition in an amount within the range of about 50 percent by weight to about 75 percent by weight, based on the total weight of the barrier composition.

7. The barrier composition of any preceding claim, further comprising a dispersant, wherein the dispersant comprises at least one of ammonium polyacrylate or polyethylenimine (PEI).

8. The barrier composition of claim 7, wherein the dispersant is present in the barrier composition in an amount in the range of about 0.01 percent by weight to about 1.0 percent by weight, based on the total weight of the barrier composition.

9. An electrochemical cell (202) comprising: a metallic component (204); and the barrier composition of any preceding claim.

10. The electrochemical cell of claim 9, wherein the metallic component (204) is in direct contact with the barrier layer (206).

11. The electrochemical cell of claim 9 or 10, further comprising a glass component (208), wherein the barrier layer (206) is disposed between the metallic component (204) and the glass component (208), and wherein the glass component (208) is disposed between the metallic component (204) and an active layer (210) of the electrochemical cell (202).

12. The electrochemical cell of any of claims 9 to 11, wherein a thickness of the barrier layer (206) is in the range of about 2 micrometers to about 25 micrometers.

13. An electrochemical device (200) comprising the electrochemical cell of any of claims 9 to 12.

14. A method of making an electrochemical cell (202), the electrochemical cell (202) comprising an anode (212), a cathode (214) and an electrolyte (216) disposed therebetween and a metallic interconnect (204) disposed adjacent to at least one of the anode (212) or the cathode (214), the method comprising forming a barrier layer comprising a ceramic powder on the metallic interconnect (204), the ceramic powder comprising a ceramic material having a coefficient of thermal expansion (CTE) in the range of about 10 x 10⁻⁶/°C and about 12 x10⁻⁶/°C and a binder comprising a phosphate-based compound.

15. The method of claim 14, wherein forming the barrier layer comprises at least one of painting or spraying the ceramic material and the binder onto a surface (224) of the metallic interconnect (204).
